# EUROPÄISCHE PATENTSCHRIFT

(11) **EP 0 598 352 B1**
(45) Veröffentlichungstag und Bekanntmachung des Hinweises auf die Patenterteilung: **31.01.1996**
(21) Anmeldenummer: 93118324.8
(22) Anmeldetag: 12.11.1993
(51) Int. Cl.: B60J 7/04

(54) **Starrer Deckel für die Dachöffnung eines Fahrzeugs**
Rigid panel for a vehicle roof opening
Panneau rigide pour ouverture de toit de véhicule

(30) Priorität: 17.11.1992 DE 4238714
(43) Veröffentlichungstag der Anmeldung: 25.05.1994
(73) Patentinhaber: Rockwell Golde GmbH, D-60314 Frankfurt (DE)
(72) Erfinder: Grimm, Rainer, Dipl.-Ing., D-35578 Wetzlar (DE); Böhm, Horst, Dipl.-Ing., D-60598 Frankfurt (Main) (DE)
(74) Vertreter: Oppermann, Ewald, Dipl.-Ing.

(56) Entgegenhaltungen:
- EP-A- 0 076 924
- EP-A- 0 429 361
- DE-U- 9 016 831

## Beschreibung

Die Erfindung bezieht sich auf einen starren Deckel für die Dachöffnung eines Fahrzeugs entsprechend dem Oberbegriff des Patentanspruchs 1. Ein derartiger Deckel ist aus EP-A-0 429 361 bekannt. Der starre Deckel kann im Rahmen der Erfindung für alle bekannten Bauarten von Fahrzeugdächern Verwendung finden, wie für Schiebedächer, Schiebehebedächer, Oberfirstschiebedächer und einfache vorn scharnierte Lüftungsklappen, bei welchen der starre Deckel nur verschwenkbar oder zusätzlich auch abnehmbar ausgebildet sein kann.

Derartige Glasdeckel füllen in der geschlossenen Dachstellung unter allseitiger Abdichtung die Dachöffnung vollständig aus. Im Fahrbetrieb wirken auf den Glasdeckel sich mit zunehmender Fahrgeschwindigkeit vergrößernde Auftriebskräfte ein. Da der Deckel normalerweise lediglich an seinen Längsseiten an den in die karosseriefesten Führungsschienen eingreifenden Gleitelementen gehalten wird, kann er sich infolge dieser Auftriebskräfte nach oben über die Dachkontur überwölben. Die Überwölbung führt vor allem an der Vorder- und Hinterkante des Dachausschnitts infolge der dort auftretenden Stufenbildung zu Strömungsgeräuschen. Weiterhin führt die Überwölbung des Deckels zu nachteiligen Schrägstellungen der Deckelhalte- und Betätigungselemente an den Verbindungsteilen zwischen den Deckelseitenkanten und den Führungsschienen. Eine Vergrößerung der Profilabmessungen der Versteifungsprofile im Sinne einer Erhöhung ihrer Widerstandsmomente kann trotz form- und kraftschlüssiger Verbindung von Versteifungsprofilen und Glasscheibe mit einer angegossenen oder angeschäumten Deckelrandeinfassung aus Kunststoff keine ausreichende Deckelstabilität gegenüber den Auftriebskräften gewährleisten.

Weiterhin wird die Einhaltung einer der Dachwölbung, insbesondere der Dachquerwölbung, entsprechenden Deckelwölbung beeinflußt durch das unterschiedliche Ausdehnungsverhalten der Glasscheibe und der Versteifungsprofile aus Stahl, hervorgerufen durch den Aufheizvorgang bei dem Angießen oder Anschäumen der Kunststoffeinfassung im Werkzeug und den anschließenden Abkühlvorgang, nachdem der fertige Deckel dem Werkzeug entnommen worden ist.

Bei einem bekannten Schiebedach aus Glas (G 90 16 831.3) wird ausgehend von einem starren Deckel der eingangs angegebenen Gattung vorgeschlagen, die Verstärkungsprofile aus Glasfasern zu bilden, wobei die Glasfasern Langfasern (sogenannte "Rovings") sein können, welche mit einem Polyesterharz zur Bildung des Verstärkungsprofils gebunden sein können. Wenn derartige Glasfasern zur Herstellung der Verstärkungsprofile verwendet werden, so sind diese einerseits ausreichend steif, so daß sie die Aufgabe der Deckelverstärkung erfüllen können, und andererseits weisen die Glasfasern den gleichen Ausdehnungskoeffizienten wie die Glasscheibe auf, so daß entsprechende Spannungsdifferenzen nicht auftreten können. In verschiedener Hinsicht ist jedoch der Einsatz von Versteifungsprofilen aus Stahl vorzuziehen, zumal der Elastizitätsmodul von Stahl etwa dreimal so groß ist wie derjenige von Glasfasern. Für die erfindungsgemäßen Zwecke ist allerdings nicht nur Stahl als Werkstoff geeignet, sondern auch andere Metalle, die über einen vergleichbaren Elastizitätsmodul verfügen.

Der Erfindung liegt daher die Aufgabe zugrunde, einen starren Deckel entsprechend der eingangs angegebenen Gattung bereitzustellen, der seine der Dachwölbung angepaßte Wölbung auch bei auf ihn einwirkenden Auftriebskräften in etwa beibehält, und zwar unabhängig von den herrschenden Umgebungstemperaturen.

Die gestellte Aufgabe wird durch die kennzeichnenden Merkmale des Patentanspruchs 1 gelöst. Dabei ist erfindungsgemäß vorgesehen, daß die noch nicht eingebetteten Versteifungsprofile in ihrer Längsrichtung eine gegenüber der Glasscheibe unterschiedliche Wölbung aufweisen. Weiterhin sind dabei die Versteifungsprofile vor der Anbringung der Einfassung aus Kunststoff elastisch in eine der Glasscheibe etwa entsprechende Wölbung gebogen. Schließlich sind die Versteifungsprofile nach Anbringung der Einfassung aus Kunststoff in der Einfassung mit Vorspannung eingebettet. Der starre Deckel weist somit eine der Dachwölbung angepaßte Wölbung auf und besitzt in den Randkunststoff eingebettete Versteifungsprofile, die aufgrund ihrer Vorspannung dafür sorgen, daß die Deckelwölbung unter allen Betriebszuständen und Temperatureinflüssen etwa gleich bleibt. Die Vorspannkräfte der Versteifungsprofile wirken hierbei in eine der Auftriebsrichtung entgegengesetzte Richtung.

Vorzugsweise ist die Anordnung gemäß Anspruch 2 so getroffen, daß die noch nicht mit der Einfassung aus Kunststoff versehene Glasscheibe eine der Wölbung des Fahrzeugdachs etwa entsprechende Wölbung aufweist, während die Wölbung der noch nicht eingebetteten Versteifungsprofile flacher ausgeführt ist. Es ist ersichtlich, daß eine Biegung der flacher gewölbten Versteifungsprofile in die Form der stärker gewölbten Glasscheibe zu einer permanenten Vorspannung der Versteifungsprofile nach ihrer in dieser Biegelage erfolgten Einbettung führt.

Bei der vorteilhaften Ausbildung gemäß Anspruch 3 sind etwa an den Enden der Versteifungsprofile Andruckvorsprünge angebracht, welche der Glasscheibe von unten anliegen, wobei etwa in der Mitte der Versteifungsprofile jeweils ein nach unten gerichteter Andruckvorsprung angebracht ist. Während die an den Enden angebrachten Andruckvorsprünge der Versteifungsprofile sich unmittelbar an die Glasscheibe anlegen, sitzen die in der Mitte angebrachten nach unten gerichteten Andruckvorsprünge dem Werkzeugunterteil der Angieß- oder Umschäumungsform auf. Auf diese Weise sorgen die Andruckvorsprünge nicht nur für eine entsprechende Biegung der Versteifungsprofile zur Wölbungsangleichung an die Glasscheibe, sondern bewirken auch Abstände zwischen einerseits der Glasscheibe und den Versteifungsprofilen und andererseits den Versteifungsprofilen und den Werkzeugunterteilen, so daß der Kunststoff die Versteifungsprofile allseits gleichmäßig umhüllt. Die nach unten gerichteten mittleren Andruckvorsprünge der Versteifungsprofile können alternativ natürlich auch mit gleicher Wirkung in der Mitte des unteren Werkzeugteils den Versteifungsprofilen gegenüberliegend angebracht sein.

Die Anordnung kann nach Anspruch 4 zweckmäßig so getroffen sein, daß die gewölbten Versteifungsprofile die Querteile eines einteiligen Versteifungsrahmens sind.

Weitere Einzelheiten der Erfindung werden anhand der einerseits ein Ausführungsbeispiel und andererseits den Fertigungsvorgang darstellenden Zeichnungen näher erläutert. Darin zeigt:
- Fig. 1: die abgebrochene Draufsicht auf den Deckel,
- Fig. 2: den der Schnittverlaufslinie II-II in Fig. 1 folgenden, etwa in der Mitte unterbrochenen Längsschnitt durch den Deckel,
- Fig. 3: den der Schnittverlaufslinie III-III in Fig. 1 folgenden, abgebrochenen Querschnitt durch den Deckel,
- Fig. 4: den der Schnittverlaufslinie IV-IV in Fig. 1 folgenden, abgebrochenen Querschnitt durch den Deckel,
- Fig. 5: einen Querschnitt durch die offene Angieß- oder Umschäumungsform mit zwischen Werkzeugunterteil und Werkzeugoberteil "schwebend" eingezeichneter Glasscheibe und einem demgegenüber flacher gewölbten Versteifungsprofil,
- Fig. 6: einen Querschnitt durch die geschlossene, für den Kunststoff aufnahmebereite Form, mit dem Werkzeugoberteil flächig anliegender Glasscheibe und dem zwischen Glasscheibe und Werkzeugunterteil eingespannten und etwa in die Wölbung der Glasscheibe gebogenen Versteifungsprofil und
- Fig. 7: einen der Fig. 5 ähnlichen Querschnitt durch die wieder geöffnete Form, mit zwischen Werkzeugunterteil und Werkzeugoberteil "schwebend" eingezeichnetem fertigen Deckel.

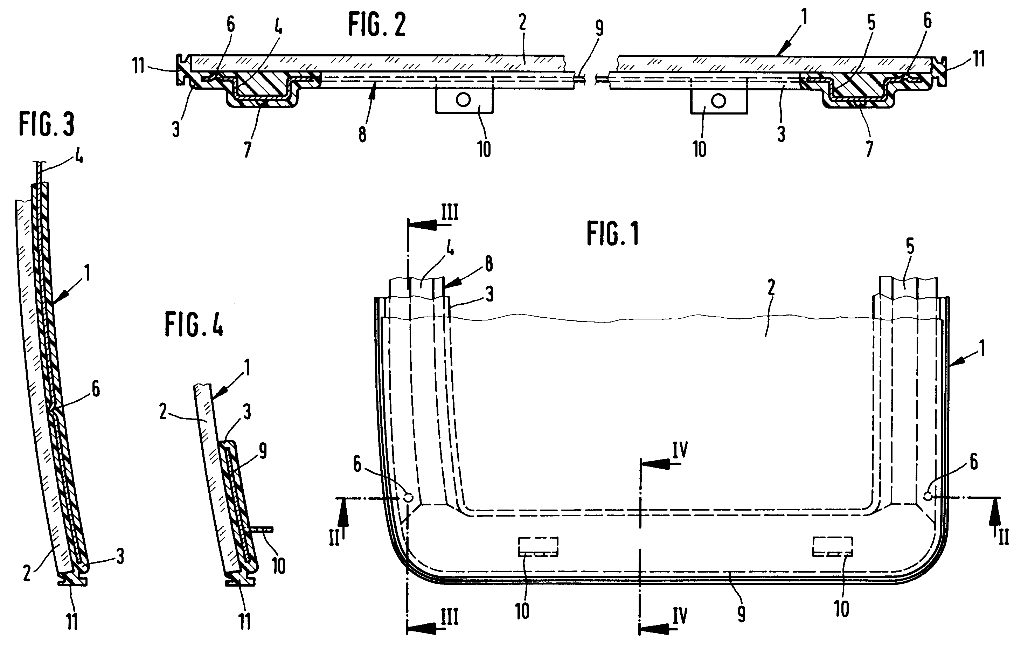

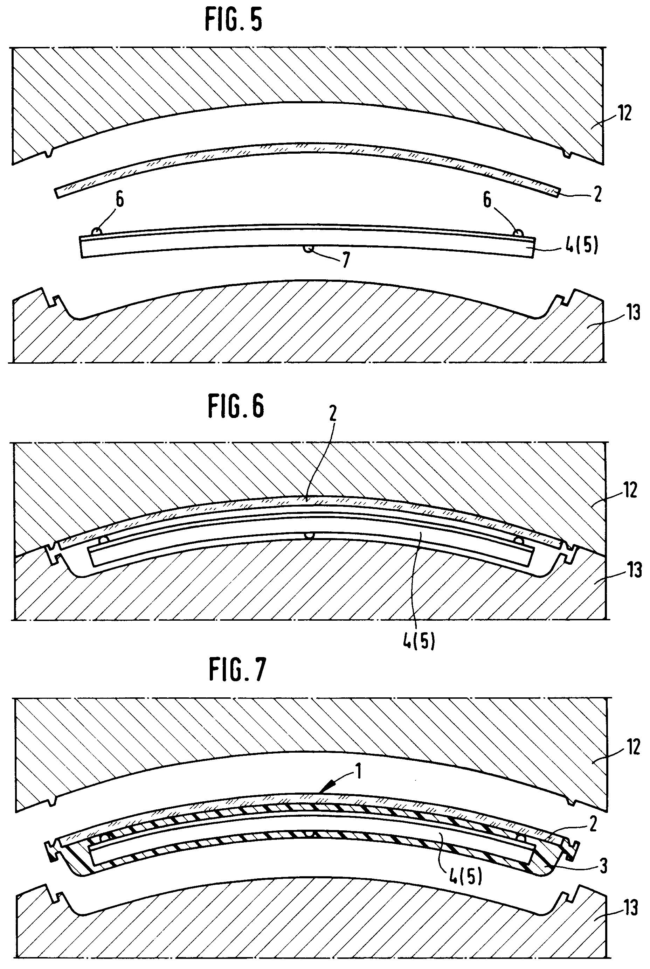

In den Zeichnungen sind die Figuren 2 bis 4 gegenüber Fig. 1 vergrößert dargestellt. Die den sequentiellen Fertigungsvorgang darstellenden Figuren 5 bis 7 sind im wesentlichen nur schematisch dargestellt. Hierbei sind die Wölbungsradien zum Zwecke der Verdeutlichung übertrieben klein bzw. die Wölbungskrümmungen übertrieben groß dargestellt.

In den Figuren 1 bis 4, die den fertigen starren Deckel veranschaulichen, sind dargestellt: der insgesamt mit der Bezugszahl 1 versehene Deckel, die Glasscheibe 2, die den Randbereich der Glasscheibe 2 rahmenartig umgebende Einfassung 3 aus Kunststoff, die in die Einfassung 3 eingebetteten und die Glasscheibe 2 von unten abstützenden Versteifungsprofile 4 und 5, die an den Versteifungsprofilen 4, 5 nach unterschiedlichen Seiten vorstehenden Andruckvorsprünge 6 und 7 und schließlich der die Versteifungsprofile 4, 5 integrierende und insgesamt mit der Bezugszahl 8 bezeichnete Versteifungsrahmen.

Der Deckel 1 besitzt in Anpassung an die nicht dargestellte Dachöffnung eines Fahrzeugs etwa die Form eines Rechtecks, dessen längere Seiten quer zur Fahrzeuglängsachse verlaufen. Der Deckel 1 ist in seiner längeren Quererstreckung der in Querrichtung des Fahrzeugs vorliegenden Dachwölbung angepaßt. Gegebenenfalls ist der Deckel 1 selbstverständlich auch mit seiner kürzeren Längserstreckung der entsprechenden an der Dachöffnung vorliegenden Wölbung des Fahrzeugdaches angepaßt, wenngleich bei modernen Fahrzeugen die Dächer in Querrichtung wesentlich stärker gewölbt sind als in Längsrichtung des Fahrzeugs. Wenn daher auch nur die in Fahrzeugquerrichtung verlaufenden Versteifungsprofile 4, 5 in ihrer besonderen Ausbildung beschrieben sind, so können doch auch in Längsrichtung des Fahrzeugs an den kürzeren Seiten des Deckels 1 prinzipiell entsprechend ausgebildete Versteifungsprofile in die Einfassung 3 aus Kunststoff eingebettet sein. Im gezeichneten Beispiel können die die Versteifungsprofile 4, 5 zu dem einteiligen Versteifungsrahmen 8 ergänzenden Verbindungsprofile 9 ähnlich wie die Versteifungsprofile 4, 5 ausgebildet sein, d.h. im nicht in die Einfassung 3 eingebetteten Zustand eine von der Glasscheibe 2 abweichende Wölbung aufweisen.

An den Verbindungsprofilen 9 befinden sich nach unten weisende und aus der Einfassung 3 herausreichende Laschen 10, die zum Anschluß des Deckels 1 an die nicht dargestellten Führungs- und Funktionselemente der Dachkonstruktion vorgesehen sind. Im gezeigten Beispiel ist am Außenumfang der Einfassung 3 ein im Querschnitt etwa T-förmiges Befestigungselement 11 angeformt, welches zur Anbringung eines Randspaltabdichtungsprofils (nicht gezeigt) dient. Die Versteifungsprofile 4, 5 sind übereinstimmend jeweils im mittleren Bereich als nach oben offenes U-Profil ausgebildet, dessen senkrechte Schenkel jeweils zu einem mit dem Steg des U-Profils parallelen Flansch abgebogen sind. Die Andruckvorsprünge 6 können wie gezeigt in einem der Flansche oder aber auch in beiden Flanschen angebracht sein.

Die Herstellung des vorstehend beschriebenen Deckels 1 wird nachfolgend anhand der Figuren 5 bis 7 erläutert. In das gemäß Fig. 5 aufgefahrene Formwerkzeug werden die Glasscheibe 2 in das Werkzeugoberteil 12 und die Versteifungsprofile 4 und 5 in das Werkzeugunterteil 13 eingelegt und so zueinander ausgerichtet und fixiert, daß die Glasscheibe 2 vollständig und flächig der gewölbten Formkontur des Werkzeugoberteils 12 anliegt, während die Versteifungsprofile 4 und 5 mit ihren Andruckvorsprüngen 7 der gewölbten Formfläche des Werkzeugunterteils 13 aufliegen.

Werden nun Werkzeugoberteil 12 und Werkzeugunterteil 13 beim Schließvorgang gegenläufig zusammengefahren, so werden die Versteifungsprofile 4 und 5 so durchgebogen, daß sie bei vollständig geschlossenem Formwerkzeug (Fig. 7) der Wölbungskontur der Glasscheibe 2 mindestens annähernd bogenparallel sind. Die seitlichen Andruckvorsprünge 6 an den Versteifungsprofilen 4 und 5 liegen dabei der Glasscheibe 2 von unten an und wirken als Abstandshalter, so daß ein Abstand zwischen der Oberseite der Versteifungsprofile 4, 5 und dem Randbereich der Glasscheibenunterseite entsteht.

Beim nachfolgenden Angieß- oder Umschäumungsvorgang wird die Glasscheibe 2 allseitig an ihrem Randbereich nach Maßgabe der Formausbildung mit der einteilig umlaufenden Einfassung 3 aus Kunststoff versehen. Hierbei werden die Versteifungsprofile 4, 5 vollständig von dem Kunststoff umhüllt. Nach Abkühlung bilden die Glasscheibe, die Versteifungsprofile 4, 5 bzw. der Versteifungsrahmen 8 und die Kunststoffeinfassung 3 den einteiligen starren Deckel 1, wobei die durch das Biegen der Versteifungsprofile 4, 5 erzeugte elastische Vorspannung permanent aufrechterhalten bleibt.

Diese Vorspannung in den Versteifungsprofilen 4, 5 hat die Tendenz, die Querwölbung des Deckels 1 abzuflachen, wodurch einem Überwölben der Glasscheibe unter Einfluß von Auftriebskräften nach oben entgegengewirkt wird. Im Ergebnis entsteht auf diese Weise ein starrer Deckel, der gegenüber Auftriebskräften und auch über einen weiten Temperaturbereich formstabil ist.

## Patentansprüche

1. Starrer Deckel für die Dachöffnung eines Fahrzeugs, mit einer Glasscheibe (2), die in ihrem Randbereich umlaufend mit einer angegossenen oder angeschäumten Einfassung (3) aus Kunststoff, insbesondere aus Polyurethan, versehen ist, in welche mindestens an den längeren Seiten die Glasscheibe (2) von unten abstützende Versteifungsprofile (4, 5) aus Stahl eingebettet sind, **dadurch gekennzeichnet**, daß die noch nicht eingebetteten Versteifungsprofile (4, 5) in ihrer Längsrichtung eine gegenüber der Glasscheibe (2) unterschiedliche Wölbung aufweisen, daß die Versteifungsprofile (4, 5) vor der Anbringung der Einfassung (3) aus Kunststoff elastisch in eine der Glasscheibe (2) etwa entsprechende Wölbung gebogen sind und daß die Versteifungsprofile (4, 5) nach Anbringung der Einfassung (3) aus Kunststoff in der Einfassung mit Vorspannung eingebettet sind.

2. Starrer Deckel nach Anspruch 1, **dadurch gekennzeichnet**, daß die noch nicht mit der Einfassung (3) aus Kunststoff versehene Glasscheibe (2) eine der Wölbung des Fahrzeugdaches etwa entsprechende Wölbung aufweist, während die Wölbung der noch nicht eingebetteten Versteifungsprofile (4, 5) flacher ausgeführt ist.

3. Starrer Deckel nach Anspruch 1 oder 2, **dadurch gekennzeichnet**, daß etwa an den Enden der Versteifungsprofile (4, 5) Andruckvorsprünge (6) angebracht sind, welche der Glasscheibe (2) anliegen, und daß etwa in der Mitte der Versteifungsprofile (4, 5) jeweils ein nach unten gerichteter Andruckvorsprung (7) angebracht ist.

4. Starrer Deckel nach mindestens einem der Ansprüche 1 bis 3, **dadurch gekennzeichnet**, daß die gewölbten Versteifungsprofile (4, 5) die Querteile eines Versteifungsrahmens (8) sind.

## Claims

1. Rigid cover or lid for the roof opening of a vehicle, comprising a glass pane (2) which is provided in its peripheral region all around with a cast-on or foamed-on border (3) of plastics material, especially of polyurethane, into which stiffening profiles (4, 5) of steel, bearing from below against at least the longer sides of the glass pane (2), are embedded, characterized in that the not yet embedded stiffening profiles (4, 5), have a curvature in their longitudinal direction that is different from that of the glass pane (2), that the stiffening profiles (4, 5), before the border (3) of plastics material is fitted, are bent elastically into a curvature corresponding approximately to that of the glass pane (2) and that the stiffening profiles (4, 5), after the border (3) of plastics material is fitted, are embedded with prestress in the border.

2. Rigid lid according to Claim 1, characterized in that the glass pane (2), not yet provided with the border (3) of plastics, has a curvature approximately corresponding to the curvature of the vehicle roof, whereas the curvature of the not yet embedded stiffening profiles (4, 5) is of flatter shape.

3. Rigid lid according to Claim 1 or 2, characterized in that, approximately at the ends of the stiffening profiles (4, 5), bearing projections (6) are provided, which bear against the glass pane (2), and that approximately in the middle of each of the stiffening profiles (4, 5), a downwardly orientated bearing projection (7) is provided.

4. Rigid lid according to at least one of Claims 1 to 3, characterized in that the curved stiffening profiles (4, 5) are the transverse members of a stiffening frame (8).

## Revendications

1. Couvercle rigide pour l'ouverture de toit d'un véhicule, comportant une vitre (2) qui est pourvue tout autour sur sa région de bordure d'un encadrement (3) coulé ou en mousse de matière plastique, en particulier en polyuréthane, dans lequel sont noyés au moins sur les côtés longs de la vitre (2) des profilés de rigidification (4, 5) en acier pour le support depuis le bas, caractérisé en ce que les profilés de rigidification (4, 5) qui ne sont pas encore noyés, présentent dans leur direction longitudinale un bombement différent par rapport à la vitre (2), en ce que les profilés de rigidification (4, 5) sont fléchis, avant la fixation de l'encadrement (3) en matière plastique, élastiquement sous un bombement correspondant approximativement à la vitre (2), et en ce que les profilés de rigidification (4, 5) sont noyés, après agencement de l'encadrement (3) en matière plastique, avec précontrainte dans l'encadrement.

2. Couvercle rigide selon la revendication 1, caractérisé en ce que la vitre (2), qui n'est pas encore pourvue de l'encadrement (3) en matière plastique, présente un bombement correspondant approximativement au bombement du toit de véhicule, tandis que le bombement des profilés de rigidification (4, 5) qui ne sont pas encore noyés, est réalisé de façon plus aplatie.

3. Couvercle rigide selon l'une ou l'autre des revendications 1 et 2, caractérisé en ce qu'il est prévu approximativement aux extrémités des profilés de rigidification (4, 5) des saillies d'appui (6) qui s'appuient contre la vitre (2), et en ce qu'il est prévu approximativement au centre des profilés de rigidification (4, 5) une saillie d'appui respective (7) dirigée vers le bas.

4. Couvercle rigide selon l'une quelconque au moins des revendications 1 à 3, caractérisé en ce que les profilés de rigidification bombés (4, 5) sont les parties transversales d'un cadre de rigidification (8).
